# EUROPÄISCHE PATENTANMELDUNG

(11) **EP 3 311 643 A1**
(43) Veröffentlichungstag der Anmeldung: **25.04.2018**
(21) Anmeldenummer: 17401109.8
(22) Anmeldetag: 17.10.2017
(51) Int. Cl.: A01C 15/00

(54) **LANDWIRTSCHAFTLICHE VERTEILMASCHINE MIT FÜLLSTANDSERFASSUNGSVORRICHTUNG**

(30) Priorität: 18.10.2016 DE 102016119777
(71) Anmelder: Amazonen-Werke H. Dreyer GmbH & Co. KG, 49205 Hasbergen (DE)
(72) Erfinder: Rüsse, Mario, 49080 Osnabrück (DE)

(57) **Zusammenfassung**

Landwirtschaftliche Verteilmaschine mit FüllstandserfassungsvorrichtungLandwirtschaftliche Verteilmaschine mit einem Vorratsbehälter (2) zur Bevorratung von körnigem, auszubringendem Material, wobei dem Vorratsbehälter (2) zumindest eine Füllstandserfassungsvorrichtung (4) zugeordnet ist, die Füllstandserfassungsvorrichtung (4) ein Auftriebselement (5A, 5B, 5) umfasst, das Auftriebselement (5A, 5B, 5) mit einer Führungseinrichtung (6B, 6) verbunden und entlang der Führungseinrichtung (6B, 6) bewegbar ist. Um ein ein Auftriebselement (5A, 5B, 5) umfassendes Füllstandserfassungsvorrichtung (4) zu schaffen, mit welches für eine zuverlässige Erfassung des Füllstandes körnigen Materials in einem Vorratsbehälter (2) geeignet ist, ist vorgesehen, dass die Füllstandserfassungsvorrichtung (4) geeignet ist, die Position des Auftriebselements (5A, 5B, 5) relativ zur Führungseinrichtung (6B, 6) zu erfassen

## Beschreibung

Die Erfindung betrifft eine landwirtschaftliche Verteilmaschine mit einem Vorratsbehälter gemäß dem Oberbegriff des Patentanspruches 1.

Ein derartiger Vorratsbehälter ist in der DE 37 18 116 A1 beschrieben. Innerhalb des ist eine Füllstandserfassungsvorrichtung vorgesehen. Die Füllstandserfassungsvorrichtung umfasst ein Auftriebselement, welches mit einer Speiche verbunden ist. Das Auftriebselement ist mithilfe einer Führungseinrichtung entlang der Längsachse der Speiche beweglich und liegt stets auf der Oberfläche von im Vorratsbehälter bevorrateten Material auf. Die Speiche ist innerhalb des Vorratsbehälters schwenkbar an einer Behälterwand angelenkt, wobei der Winkel zwischen der Speiche und der Behälterwand über den Behälterfüllstand durch die Position des Auftriebselements festgelegt ist. Mit der Speiche ist ein erstes Ende einer Verbindungsstange gelenkig verbunden. Das zweite Ende der Verbindungsstange ist an einem Sichtteil angelenkt, welches innerhalb eines Zylinders entlang der Längsachse des Zylinders beweglich gelagert ist. Der Zylinder ist an einer für einen Bediener gut sichtbaren Position des Vorratsbehälters angeordnet und transparent ausgeführt. Somit ist visuell erkennbar, wie weit das Sichtteil in den Zylinder hineinragt. Über die Verbindung zwischen Speiche und Verbindungsstange wird die Weite des Hineinragens des Sichtteils in den Zylinder durch den Füllstand des Vorratsbehälters bestimmt.

Nachteilig bei der beschriebenen Anordnung ist, dass die Füllstandserfassung nur visuell erfolgen kann. Eine ungefähre Information über den Füllstand des Vorratsbehälters liegt lediglich durch Sichtkontakt dem Bediener vor. Es können weder exakte Füllstandswerte angegeben werden, noch können die Füllstandswerte beispielsweise einer Auswerteeinheit zur Weiterverarbeitung zugeführt werden.

Ein weiterer Vorratsbehälter wird in der DE 10 2009 045 667 A1 beschrieben. Die vorgesehene Füllstandserfassungsvorrichtung weist ebenfalls ein Auftriebselement auf. Das Auftriebselement liegt auf der Oberfläche des im Vorratsbehälter bevorrateten Materials auf und ist entlang der Längsachse einer Führungsstange beweglich gelagert. Das Auftriebselement erzeugt einen Messwert, welcher von dem Füllstand des im Vorratsbehälter bevorrateten Materials abhängig ist. Der erzeugte Messwert wird an eine Auswerteeinheit zur Weiterverarbeitung übermittelt. Zusätzlich wird mittels eines Neigungssensors die Neigung des Vorratsbehälters ermittelt. Durch Kombination beider Messwerte für den ermittelte Füllstandswert eine Neigungskorrektur durchgeführt werden.

Nachteilig ist bei dieser Ausgestaltung, dass die beschriebene Anordnung ausschließlich zur Erfassung von Füllständen im Vorratsbehälter bevorrateter Flüssigkeiten vorgesehen ist. Aufgrund der Eigenschaft von Flüssigkeitsoberflächen stets eine Äquipotentialfläche auszubilden, ist zur Bestimmung des Füllstands eines Behälters bei bekannter Geometrie des Vorratsbehälters die Ermittlung des Pegels der Äquipotentialfläche sowie der Behälterneigung ausreichend. Wird im Vorratsbehälter körniges Material, beispielsweise Saatgut und/oder Düngemittel, bevorratet, führt der beschriebene Ansatz nicht zum Ziel. Körniges Material weist nur eine begrenzte Fließfähigkeit auf. So kann sich beispielsweise infolge einer ungleichmäßigen Beladung und/oder eines Verrutschens des Materials während einer Hangfahrt ein ungleichmäßiger Füllstand ausbilden.

Wird die Position des Auftriebselements beispielsweise bezüglich des Behälterbodens oder der Behälterabdeckung bestimmt, ist diese Position von der Schichtdicke des bevorrateten, zwischen Auftriebselement und Bezugspunkt gelegenen Materials abhängig. Bereits zur Bestimmung der Position des Auftriebselements ist daher die Kenntnis der Behälterneigung, also einer zusätzlichen Messgröße, erforderlich. Dadurch sinkt die Messgenauigkeit, weil die Behälterneigung als zusätzliche, prinzipiell messfehlerbehaftete Größe in die Bestimmung einfließt.

Der Erfindung liegt daher die Ausgabe zugrunde, eine ein Auftriebselement umfassende Füllstandserfassungsvorrichtung zu schaffen, welches für eine zuverlässige Erfassung des Füllstandes körnigen Materials in einem Vorratsbehälter geeignet ist.

Diese Aufgabe wird erfindungsgemäß dadurch gelöst, dass die Füllstandserfassungsvorrichtung zur Erfassung der Position des Auftriebselements relativ zur Führungseinrichtung ausgebildet ist.

Die Nutzung der relativen Position des Auftriebselements bezüglich der Führungseinrichtung hat Vorteile hinsichtlich der erreichbaren Messgenauigkeit. Zudem ist die Bestimmung der relativen Position des Auftriebselements bezüglich der Führungseinrichtung frei von äußeren Einflüssen, wie beispielswiese einer Neigung des Vorratsbehälters. Somit ist über die Bestimmung der Position des Auftriebselements relativ zur Führungseinrichtung die Bestimmung der Position des Auftriebselements innerhalb des Vorratsbehälters mit hoher Genauigkeit möglich.

Es ist vorteilhaft, dass sich die Position des Auftriebselements relativ zur Führungseinrichtung infolge einer Linearbewegung oder einer Kreisbewegung des Auftriebselements ändert. Linear- oder Kreisbewegungen lassen sich messtechnisch mit besonders einfachen Mitteln erfassen. Zudem sind Linear- oder Kreisbewegungen rechnerisch leicht zu handhaben. Somit ist eine zuverlässige und schnelle Ermittlung und/oder Auswertung der relativen Position des Auftriebselements bezüglich der Führungseinrichtung möglich. Dadurch ist beispielsweise eine Echtzeit-Erfassung der relativen Position des Auftriebselements bezüglich der Führungseinrichtung in einfacher Weise durchführbar.

Ein Vorteil wird dadurch erreicht, dass die Füllstandserfassungsvorrichtung die Position des Auftriebselements relativ zur Führungseinrichtung mithilfe elektrischer und/oder magnetischer Mittel erfasst. Die ermittelten Positionen des Auftriebselements werden üblicherweise zur Weiterverarbeitung einer digitalen Auswerteeinheit zugeführt. Mittels elektrischer und/oder (elektro-)magnetischer Mittel erfasste Positionen des Auftriebselements können ohne weitere Konvertierung einer derartigen digitalen Auswerteeinheit zur Weiterverarbeitung zugeführt werden. Dadurch werden zeitliche Verzögerungen auf das Minimum der reinen Übertragungsdauer reduziert und die Konvertierung als Fehlerquelle ausgeschlossen. Somit ist eine effiziente zuverlässige Übermittlung der gemessenen relativen Positionen des Auftriebselements zwischen der Füllstandserfassungsvorrichtung und der Auswerteeinheit sichergestellt.

Es ist vorteilhaft, dass die elektrischen Mittel zur Ermittlung der relativen Position des Auftriebselements bezüglich der Führungseinrichtung als Potentiometergeber ausgebildet sind. Mit Potentiometergebern sind Positionen besonders einfach abzufragen. Potentiometer können beispielsweise als Linearpotentiometer oder als Drehpotentiometer ausgebildet sein. Somit lassen sich Linearbewegungen oder Kreisbewegungen zuverlässig erfassen und die elektrisch ermittelten Positionsdaten eines geeigneten, sich bewegenden und/oder beweglichen Objektes in einfacher Weise einer digitalen Auswerteeinheit übermitteln.

Es wird ein Vorteil erreicht, indem die elektrischen und/oder magnetischen Mittel zur Ermittlung der relativen Position des Auftriebselements bezüglich der Führungseinrichtung als Reedkontakte ausgeführt sind und das Auftriebselement zumindest teilweise magnetisch ausgeführt ist. Durch das Heranführen eines zumindest teilweise magnetisch ausgeführten Auftriebselements an einen Reedkontakt, werden mittels magnetischer Wechselwirkungen innerhalb des Reedkontakts Elektroden geschaltet. Sind mehrere Reedkontakte beispielsweise der linearen Führungseinrichtung zugeordnet, werden diese Reedkontakte in Abhängigkeit von der relativen Position des Auftriebselements bezüglich der Führungseinrichtung geschaltet. Dadurch lässt sich die Position des Auftriebselements relativ zur Führungseinrichtung elektromagnetisch in einfacher Weise feststellen. Die Ermittelten Positionsdaten sind in der beschriebenen Weise der Auswerteeinheit einfach zuführbar.

Vorratsbehälter der beschriebenen Art dienen der Bevorratung von zu verteilendem Material. Bei der Verwendung bei einer landwirtschaftlichen Verteilmaschine wird vorzugsweise Saatgut und/oder Düngemittel bevorratet. Es ist notwendig das bevorratete Material vor Witterungseinflüssen, wie beispielsweise Regen, zu schützen. Zu diesem Zweck weist der Vorratsbehälter eine Einfüllöffnung und eine Abdeckung auf, welche zwischen einer die Einfüllöffnung abdeckenden Arbeitsposition und einer die Einfüllöffnung freigebenden Einfüllposition verbringbar ist.

Es ist von Vorteil, dass das Auftriebselement an der Abdeckung derart befestigt ist, dass das Auftriebselement durch Verbringen der Abdeckung in ihre Einfüllposition angehoben und durch Verbringen der Abdeckung in ihre Arbeitsposition abgesenkt wird, wobei das Auftriebselement beweglich auf der Oberfläche des bevorrateten Materials aufliegt. Auf diese Weise ist sichergestellt, dass das Auftriebselement nicht vom bevorrateten Material verschüttet wird.

Es ist möglich, wenn der Vorratsbehälter mit zu verteilendem Material befüllt wird, das Auftriebselement aber während des Befüllvorgangs im unteren Teil des Vorratsbehälters verbleibt. Nach Beendigung des Befüllvorgangs ist das Auftriebselement in diesem Falle verschüttet. Es ist dann nur schwer zu bergen, sodass eine Füllstandserfassung während des Ausbringvorgangs nicht erfolgen kann. Um einen solchen Bedienfehler zu vermeiden, ist die Befestigung des Auftriebselements an der Abdeckung des Vorratsbehälters in der beschriebenen Weise vorgesehen. Bei einem Verbringen der Abdeckung in die Einfüllposition wird dann das Auftriebselement automatisch in eine Höhe angehoben, in welcher das Auftriebselement während eines Befüllvorgangs nicht verschüttet werden kann.

Beim anschließenden Verbringen der Abdeckung in die Arbeitsposition ist sichergestellt, dass das Auftriebselement auf der Oberfläche des im Vorratsbehälter bevorrateten Materials aufliegt. Somit wird erreicht, dass die Position des Auftriebselements relativ zur Führungseinrichtung der Oberfläche des bevorrateten Materials entspricht und somit eine zuverlässige Bestimmung des Füllstands erfolgen kann.

Es wird ein Vorteil dadurch erreicht, dass ein Neigungssensor vorgesehen ist, welcher die Neigung der Verteilmaschine gegenüber der Vertikalen ermittelt. Ist die Verteilmaschine geneigt, kann das im Vorratsbehälter bevorratete verrutschen und infolge dessen ungleichmäßig verteilt sein. Durch die Ermittlung der Neigung der Verteilmaschine mittels eines Neigungssensors kann die ermittelte Neigung zur Korrektur des mittels des Auftriebselements ermittelten Füllstandswertes herangezogen werden. Somit wird durch die zusätzliche Ermittlung der Neigung der Verteilmaschine die Genauigkeit der Füllstandserfassung erheblich verbessert.

Zur Verarbeitung von ermittelten Sensordaten, wie beispielsweise der Neigung der Verteilmaschine und/oder der Position des Auftriebselements relativ zur Führungseinrichtung ist eine Auswerteeinheit vorgesehen. Die Auswerteeinheit umfasst eine Speichereinheit und ist an der Verteilmaschine und/oder an einer Zugmaschine angeordnet.
Es ist vorteilhaft, dass die Auswerteeinheit die Messwerte der relativen Positionen des Auftriebselements anhand in der Speichereinheit hinterlegter Zusammenhänge in einen Füllstandswert des Vorratsbehälters umrechnet. Auf diese Weise steht dem Bediener der Verteilmaschine ein Zahlenwert zur Verfügung, welcher - anders als die Position des Auftriebselements relativ zur Führungseinrichtung - eine konkrete Aussage über den Inhalt des Vorratsbehälters und/oder den Füllstand des Vorratsbehälters macht.

Bei Kenntnis der Geometrie des Vorratsbehälters kann der Füllstandswert beispielsweise das im Vorratsbehälter verbleibende Materialvolumen und/oder den verbleibend gefüllten Volumenanteil des Vorratsbehälters angeben. Zudem ist eine Ermittlung einer Füllstandsänderung möglich.

Zudem ist es möglich, dass in die Umrechnung der Position des Auftriebselements relativ zur Führungseinrichtung in einen Füllstandswert Korrekturgrößen, wie beispielsweise die mittels Neigungssensoren ermittelte Neigung der Verteilmaschine einfließen. Somit erhält der Bediener einen besonders genauen Füllstandswert.

Es ist üblich, dass die Auswerteeinheit ein Anzeige- und/oder Eingabeelement umfasst und das Anzeige- und/oder Eingabeelement an der Verteilmaschine und/oder einer Zugmaschine angeordnet ist.

Es ist von Vorteil, dass das Anzeige- und/oder Eingabeelement den Füllstandswert einem Bediener anzeigt. Auf diese Weise wird dem Bediener der Verteilmaschine in komfortabler und übersichtlicher Weise der Füllstand des Vorratsbehälters zur Kenntnis gebracht.

Es wird ein Vorteil dadurch erreicht, dass mehrere Füllstandserfassungsvorrichtungen vorgesehen sind. Werden mehrere erfindungsgemäße Füllstandserfassungsvorrichtungen dem Vorratsbehälter zugeordnet, kann der Füllstand des bevorrateten Materials an mehreren Stellen ermittelt werden. Somit kann bei ungleichmäßiger Beladung, beispielsweise infolge einer Neigung des Vorratsbehälters, die Genauigkeit der Füllstandserfassung erheblich verbessert werden.

Es ist vorteilhaft, dass die Auswerteeinheit anhand ermittelter Füllstandswerte der zumindest einen Füllstandserfassungsvorrichtung einen drohenden Leerstand des Vorratsbehälters feststellt und einem Bediener den drohenden Leerstand in geeigneter Weise anzeigt. Auf diese Weise erhält der Bediener den Hinweis, dass der Vorratsbehälter zur Fortsetzung des Ausbringvorgangs neu zu befüllen ist. Der Bediener kann absehen, ob die Restmenge für eine weitere Überfahrt über die landwirtschaftliche Nutzfläche ausreichend ist oder der Vorratsbehälter zuvor neu befüllt werden muss. Der Hinweis auf einen drohenden Behälterleerstand hilft dem Bediener daher, den optimalen Zeitpunkt für eine neue Befüllung des Vorratsbehälters zu wählen.

Zudem wird durch den Hinweis auf einen drohenden Leerstand vermieden, dass sich der Vorratsbehälter unbemerkt und/oder ungleichmäßig entleert. Somit ein ungleichmäßiges und/oder lückenhaftes Ausbringen des auszubringenden Materials vermieden.

Weitere Einzelheiten der Erfindung sind der Beispielsbeschreibung und den Zeichnungen zu entnehmen. Die Zeichnungen zeigen
- Fig.1: den Vorratsbehälter einer Verteilmaschine mit Auftriebselement an linearer Führungseinrichtung in seitlichem Querschnitt und
- Fig.2: den Vorratsbehälter einer Verteilmaschine mit Auftriebselement an schwenkbarer Führungseinrichtung in seitlichem Querschnitt.

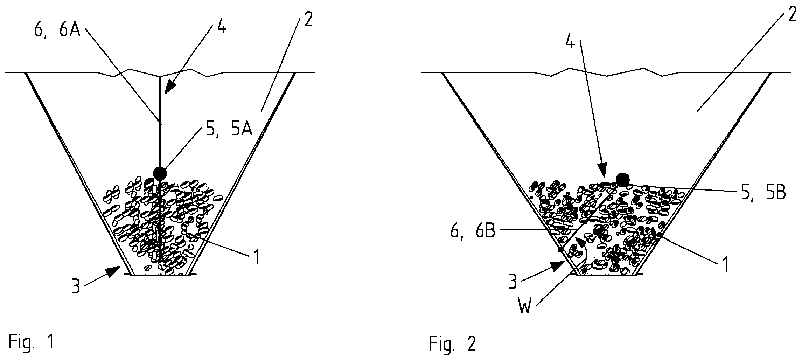

Eine landwirtschaftliche Verteilmaschine ist zum Verteilen von zu verteilendem Material 1 über einer landwirtschaftlichen Nutzfläche vorgesehen. Dazu umfasst die Verteilmaschine zumindest einen Vorratsbehälter 2, wie er in den Fig. 1 und 2 dargestellt ist. Der Vorratsbehälter 2 dient der Bevorratung von zu verteilendem, insbesondere körnigem und/oder fließfähigem Material 1, wie beispielsweise Saatgut und/oder Düngemittel.

Der Vorratsbehälter 2 ist beispielsweise quer zur Fahrtrichtung angeordnet und erstreckt sich zumindest über einen wesentlichen Teil der Breite der Verteilmaschine. In einer alternativen Ausführungsform ist eine Anordnung des Vorratsbehälters 2 längs der Fahrtrichtung möglich. Die Verteilmaschine kann beispielsweise als Sämaschine oder als Düngerstreuer ausgebildet sein.

Der Vorratsbehälter 2 läuft trichterförmig nach unten zu und weist in seinem unteren Bereich einen Auslaufbereich 3 auf. Unterhalb des Auslaufbereichs 3 ist zumindest ein nicht dargestelltes Dosierorgan angeordnet. Die Dosierorgane dienen der Einspeisung des zu verteilenden Materials 1 in einstellbaren Mengen in zu nicht dargestellten Ausbringelementen führende Förderleitungen.

Im Auslaufbereich 3 ist üblicherweise oberhalb der Dosierorgane zumindest ein Rührorgan angeordnet. In an sich bekannter Weise ist das zumindest eine Rührorgan rotierend angetrieben und verhindert Verstopfungen, Verklumpungen und/oder Brückenbildungen des zu verteilenden Materials 1 im Auslaufbereich 3 des Vorratsbehälters 2.

Zur Erfassung des momentanen Füllstands des zu verteilenden Materials 1 im Vorratsbehälter 2 ist zumindest eine Füllstandserfassungsvorrichtung 4 vorgesehen. Die Füllstandserfassungsvorrichtung 4 umfasst ein Auftriebselement 5 und eine Führungseinrichtung 6.

Das Auftriebselement 5 liegt innerhalb des mit zu verteilendem Material 1 befüllten Vorratsbehälters 2 auf der Oberfläche des zu verteilenden Materials 1 auf. Somit ist der Füllstand des zu verteilenden Materials 1 innerhalb des Vorratsbehälters 2 in an sich bekannter Weise anhand der Position des Auftriebselements 5 relativ zur Führungseinrichtung 6 ermittelbar.

Zum Schutz des in dem Vorratsbehälter 2 bevorrateten Material 1 beispielsweise vor Witterungseinflüssen ist dem Vorratsbehälter 2 eine nicht dargestellte Abdeckung zugeordnet. Derartige Abdeckungen sind typischerweise zwischen einer eine Einfüllöffnung des Vorratsbehälters 2 abdeckenden Abdeckposition und einer die Einfüllöffnung freigebenden Einfüllposition verbringbar. In bevorzugter Weise ist das Auftriebselement 5 derart mit der Abdeckung verbunden, dass das Auftriebselement beim Verbringen der Abdeckung in die Einfüllposition angehoben wird. Dadurch kann das Auftriebselement 5 während des Befüllens des Vorratsbehälters 2 nicht verschüttet werden, wodurch die erfindungsgemäße Funktion des Füllstandserfassungssystems beeinträchtigt wäre. Nach abgeschlossenem Befüllen des Vorratsbehälters 2 wird die Abdeckung in ihre Abdeckposition verbracht. Die erfindungsgemäße Verbindung des Auftriebselements 5 mit der Abdeckung des Vorratsbehälters stellt dabei sicher, dass das Auftriebselement 5 nach dem Verbringen der Abdeckung in die Abdeckposition auf der Oberfläche des im Vorratsbehälter 2 bevorrateten Materials liegt.

Im Ausführungsbeispiel der Fig. 1 ist die Führungseinrichtung 6 linear, vorzugsweise als Führungsstange 6A, ausgeführt. Das Auftriebselement 5A ist linear entlang der vorzugsweise als Führungsstange 6A ausgebildeten Führungseinrichtung 6 bewegbar.

Die Führungsstange 6A wirkt in bevorzugter Weise mit dem Auftriebselement 5A als Potentiometergeber zusammen. Somit wird in Abhängigkeit von der Position des Auftriebselements 5A relativ zur Führungsstange 6A ein elektrisches Signal erzeugt.

Alternativ ist das Auftriebselement 5A zumindest teilweise magnetisch ausgeführt. Dem als Führungsstange 6A ausgeführten Führungselement 6 sind dann in linearer Anordnung Reedkontakte zugeordnet. Somit wird in Abhängigkeit von der Position des Auftriebselements 5A relativ zur Führungsstange 6A ein elektrisches Signal erzeugt.

Eine weitere Ausführungsform ist in Fig. 2 gezeigt. Das Auftriebselement 5B ist mit einem ersten Ende einer linear aufgeführten Führungseinrichtung 6B verbunden. Das zweite Ende der Führungseinrichtung 6B ist schwenkbar innerhalb des Vorratsbehälters 2 angelenkt. Die mit dem Auftriebselement 5B verbundene Führungseinrichtung 6B wird abhängig von der Lage des Auftriebselements 5B verschwenkt.

In diesem Ausführungsbeispiel ist die Position des Auftriebselements 5B relativ zur Führungseinrichtung 6B durch den Winkel W gegeben, den die Führungseinrichtung 6B bezüglich einer festen, zuvor bestimmten Bezugsebene einnimmt.

In Bereich der Anlenkung der Führungseinrichtung 6B an den Vorratsbehälter 2 ist bevorzugt ein Drehpotentiometer vorgesehen. Mithilfe des Drehpotentiometers wird in Abhängigkeit des Winkels W, den die Führungseinrichtung 6B bezüglich einer festen, zuvor bestimmten Bezugsebene einnimmt, ein elektrisches Signal erzeugt.

Das in der jeweils beschriebenen Weise erzeugte, der Position des Auftriebselements 5 relativ zur Führungseinrichtung 6 entsprechende elektrische Signal wird an eine der zumindest einen Füllstandserfassungsvorrichtung zugeordnete Auswerteeinheit übermittelt. Die Übermittlung des Signals erfolgt mittels Datenleitungen oder drahtlos. Die Auswerteeinheit umfasst eine Speichereinheit sowie ein Eingabe- und/oder Ausgabeelement.

In der der Auswerteeinheit zugeordneten Speichereinheit sind geeignete Zusammenhänge hinterlegt, um anhand der ermittelten Position des Auftriebselements 5 relativ zur Führungseinrichtung 6 den Füllstand des im Vorratsbehälter 2 bevorrateten zu verteilenden Materials 1 zu ermitteln. Derartige Zusammenhänge umfassen beispielsweise die Geometrie des Vorratsbehälters 2.

Der ermittelte Füllstandswert gibt beispielsweise das im Vorratsbehälter 2 verbleibende Materialvolumen und/oder den verbleibend gefüllten Volumenanteil des Vorratsbehälters 2 an. Zudem ist die Ermittlung einer Füllstandsänderung vorgesehen.

Die ermittelten Füllstandswerte werden drahtlos oder mittels Datenleitungen an eine Anzeige- und/oder Eingabeelement übermittelt. Das Anzeige- und/oder Eingabeelement ist an einer für den Bediener gut einsehbaren Position angeordnet und zur Anzeige und/oder Eingabe von Daten geeignet. Dem Bediener werden auf diese Weise die momentaner Füllstandswerte und/oder -änderungen in übersichtlicher Weise angezeigt.

Während des Einsatzes der erfindungsgemäßen Verteilmaschine auf einer landwirtschaftlichen Nutzfläche kann aufgrund eines unebenen und/oder geneigten Untergrunds das zu verteilende, insbesondere körnige und/oder fließfähige Material 1, wie beispielsweise Saatgut und/oder Düngemittel, innerhalb des Vorratsbehälters 2 verrutschen. Der Pegel des bevorrateten Materials innerhalb des Vorratsbehälters ist dann ungleichmäßig. Um dennoch eine zuverlässige Ermittlung des Füllstandes zu gewährleisten, verfügt die erfindungsgemäße Verteilmaschine in ihrer bevorzugten Ausführungsform über einen Neigungssensor, der die Neigung der Verteilmaschine gegenüber der Vertikalen erfasst. Die ermittelte Neigung der Verteilmaschine wird der Auswerteeinheit zugeführt. Auf diese Weise fließt die Neigung der Verteilmaschine in die Ermittlung des Füllstandswertes des Vorratsbehälters mit ein und erhöht die Genauigkeit des ermittelten Füllstandswertes erheblich.

Es ist möglich, die Verteilmaschine mit mehreren erfindungsgemäßen Füllstandserfassungsvorrichtungen auszustatten. Somit erfolgt eine Erfassung der Position der Auftriebselemente 5 relativ zu den Führungseinrichtungen 6. Auf diese Weise wird der Pegel eines unregelmäßig im Vorratsbehälter 2 verteilten zu verteilenden Materials mit hoher Genauigkeit an mehreren Stellen erfasst. Somit kann mittels der Auswerteeinheit neben einem mittleren Füllstand auch eine Füllstandsverteilung ermittelt werden.

In bevorzugter Weise ist die Auswerteeinheit so ausgelegt, das Absinken des Füllstandes unter einen zuvor festgelegten Grenzwert festzustellen. Dabei ist es ausreichend, wenn dieser Grenzwert in nur einem Teilbereich der ermittelten Füllstandsverteilung unterschritten wird. In diesem Falle droht ein zumindest teilweiser Leerstand des Vorratsbehälters. Dem Bediener wird dieser drohende Leerstand mittels eines geeigneten Hinweis zur Kenntnis gebracht.

Durch diese Maßnahmen wird ein Füllstandserfassungssystem geschaffen, welches mit einfachen Mitteln eine genaue Füllstandserfassung gewährleistet. Das Füllstandserfassungssystem ist zudem bei älteren Verteilmaschinen nachrüstbar.

## Patentansprüche

1. Landwirtschaftliche Verteilmaschine mit einem Vorratsbehälter (2) zur Bevorratung von körnigem, auszubringendem Material (1), wobei dem Vorratsbehälter (2) zumindest eine Füllstandserfassungsvorrichtung (4) zugeordnet ist, die Füllstandserfassungsvorrichtung (4) ein Auftriebselement (5) umfasst, das Auftriebselement (5) mit einer Führungseinrichtung (6) verbunden und entlang der Führungseinrichtung (6) bewegbar ist, **dadurch gekennzeichnet, dass** die Füllstandserfassungsvorrichtung (4) geeignet ist, die Position des Auftriebselements (5) relativ zur Führungseinrichtung (6) zu erfassen.

2. Verteilmaschine nach Anspruch 1, **dadurch gekennzeichnet, dass** sich die Position des Auftriebselements (5) relativ zur Führungseinrichtung (6) infolge einer Linearbewegung oder einer Kreisbewegung des Auftriebselements (5) ändert.

3. Verteilmaschine nach zumindest einem der vorangegangenen Ansprüche, **dadurch gekennzeichnet, dass** die Füllstandserfassungsvorrichtung (4) geeignet ist, die Position des Auftriebselements (5) relativ zur Führungseinrichtung (6) mithilfe elektrischer und/oder magnetischer Mittel zu erfassen.

4. Verteilmaschine nach zumindest einem der vorangegangenen Ansprüche, **dadurch gekennzeichnet, dass** die elektrischen Mittel zur Ermittlung der Position des Auftriebselements (5) relativ zur der Führungseinrichtung (6) als Potentiometergeber ausgeführt sind.

5. Verteilmaschine nach zumindest einem der vorangegangenen Ansprüche 1 oder 2, **dadurch gekennzeichnet, dass** die elektrischen und/oder magnetischen Mittel zur Ermittlung der Position des Auftriebselements (5) relativ zur Führungseinrichtung (6) als Reedkontakte ausgeführt sind und das Auftriebselement (5) zumindest teilweise magnetisch ausgeführt ist.

6. Verteilmaschine nach zumindest einem der vorangegangenen Ansprüche, wobei der Vorratsbehälter (2) eine Einfüllöffnung und eine Abdeckung aufweist, welche zwischen einer die Einfüllöffnung abdeckenden Arbeitsposition und einer die Einfüllöffnung freigebenden Einfüllposition verbringbar ist, **dadurch gekennzeichnet, dass** das Auftriebselement (5) an der Abdeckung derart befestigt ist, dass das Auftriebselement (5) durch Verbringen der Abdeckung in ihre Einfüllposition angehoben und durch Verbringen der Abdeckung in ihre Arbeitsposition abgesenkt wird, wobei das Auftriebselement beweglich auf der Oberfläche des bevorrateten Materials (1) aufliegt.

7. Verteilmaschine nach zumindest einem der vorangegangenen Ansprüche, **dadurch gekennzeichnet, dass** ein Neigungssensor vorgesehen ist, welcher die Neigung der Verteilmaschine gegenüber der Vertikalen ermittelt.

8. Verteilmaschine nach zumindest einem der vorangegangenen Ansprüche, wobei die Verteilmaschine eine eine Speichereinheit umfassende Auswerteeinheit aufweist, welche an der Verteilmaschine und/oder an einer Zugmaschine angeordnet ist, **dadurch gekennzeichnet, dass** die Auswerteeinheit geeignet ist, die Messwerte der Positionen des Auftriebselements (5) relativ zur Führungseinrichtung (6) anhand in der Speichereinheit hinterlegter Zusammenhänge in einen Füllstandswert des Vorratsbehälters (2) umzurechnen.

9. Verteilmaschine nach Anspruch 8, wobei die Auswerteeinheit ein Anzeige- und/oder Eingabeelement umfasst und das Anzeige- und/oder Eingabeelement an der Verteilmaschine und/oder einer Zugmaschine angeordnet ist, **dadurch gekennzeichnet, dass** das Anzeige- und/oder Eingabeelement geeignet ist, den Füllstandswert einem Bediener anzuzeigen.

10. Verteilmaschine nach zumindest einem der vorangegangenen Ansprüche, **dadurch gekennzeichnet, dass** mehrere Füllstandserfassungsvorrichtungen (4) vorgesehen sind.

11. Verteilmaschine nach zumindest einem der vorangegangenen Ansprüche, **dadurch gekennzeichnet, dass** die Auswerteeinheit geeignet ist, anhand ermittelter Füllstandswerte der zumindest einen Füllstandserfassungsvorrichtung (4) einen drohenden Leerstand des Vorratsbehälters (2) festzustellen und einem Bediener den drohenden Leerstand in geeigneter Weise anzuzeigen.
